# EUROPEAN PATENT APPLICATION

(11) **EP 4 527 250 A1**
(43) Date of publication of application: **26.03.2025**
(21) Application number: 23792853.6
(22) Date of filing: 27.02.2023
(51) Int. Cl.: A46B 11/02, A46B 5/00, A61C 17/22

(54) **AUTOMATIC MOUSSE TOOTHPASTE SQUEEZING DEVICE**

(30) Priority: 16.05.2022 CN 202210526621
(71) Applicant: Kerui Technology (Dongguan) Co., Ltd., Dongguan, Guangdong 523000 (CN)
(72) Inventor: QI, Yitong, Dongguan, Guangdong 523000 (CN); YUAN, Yongzhi, Dongguan, Guangdong 523000 (CN); TANG, Da, Dongguan, Guangdong 523000 (CN)
(74) Representative: Zaboliene, Reda
(86) International application number: PCT/CN2023/078330
(87) International publication number: WO 2023/221593

(57) **Abstract**

Disclosed is an apparatus for automatically squeezing mousse toothpaste, including a toothbrush main body, where a telescopic motor, a foam pump, a connecting shaft, and a driving motor are vertically arranged in the toothbrush main body from bottom to top; the telescopic motor is vertically fixed at an inner bottom of the toothbrush main body, a bottom of the foam pump is connected to a top of the telescopic motor, a bottom of the connecting shaft is connected to a top of the foam pump, a first through hole is vertically provided in the driving motor and penetrates through a top and a bottom of the driving motor, and the driving motor is sleeved on the connecting shaft via the first through hole; and an air inlet is provided on a left side of the top of the foam pump, a liquid inlet is provided on a right side of the top of the foam pump, and both the air inlet and the liquid inlet penetrate through the foam pump.

## Description

### FIELD OF TECHNOLOGY

The present invention relates to an apparatus for automatically squeezing mousse toothpaste.

### BACKGROUND

Health issues concern everyone and even every family. A series of problems caused by oral health issues have become one of important topics of social concern. With the continuous development of society, the continuous improvement of people's living standards, and the gradual popularization of electric toothbrushes, people's requirements for functions and effects of the electric toothbrushes are constantly improving, and thus an apparatus for automatically squeezing toothpaste has become an indispensable functional part of an electric toothbrush.

According to most of electric toothbrushes sold in the existing market, mousse toothpaste is automatically squeezed by driving pumps through brush motors, which is accompanied with such problems of short service life, high noise, large size, insufficiently fine foams squeezed, and the like.

### SUMMARY

To overcome the deficiencies in the above case, the present invention aims to provide a technical solution capable of solving the above problems.

An apparatus for automatically squeezing mousse toothpaste includes a toothbrush main body, where a telescopic motor, a foam pump, a connecting shaft, and a driving motor are vertically arranged in the toothbrush main body from bottom to top;
the telescopic motor is vertically fixed at an inner bottom of the toothbrush main body, a bottom of the foam pump is connected to a top of the telescopic motor, a bottom of the connecting shaft is connected to a top of the foam pump, a first through hole is vertically provided in the driving motor and penetrates through a top and a bottom of the driving motor, and the driving motor is sleeved on the connecting shaft via the first through hole; and
an air inlet is provided on a left side of the top of the foam pump, a liquid inlet is provided on a right side of the top of the foam pump, and both the air inlet and the liquid inlet penetrate through the foam pump.

Preferably, a piston is arranged at an inner bottom of the foam pump, and the top of the telescopic motor is fixedly connected to the piston.

Preferably, a liquid outlet is provided at the top of the foam pump, a casing tube is vertically arranged at the liquid outlet, the bottom of the connecting shaft is arranged in the casing tube, and an outer side wall of the bottom of the connecting shaft is connected to an inner side wall of the casing tube.

Preferably, positioning rods are vertically arranged on the left side and the right side of the top of the foam pump, respectively, and a top of each of the positioning rods is connected to the bottom of the driving motor.

Preferably, a second through hole is vertically formed in the connecting shaft and penetrates through a top and the bottom of the connecting shaft.

Preferably, the top of the connecting shaft is sleeved with a toothbrush head, a third through hole is vertically formed in the toothbrush head, a bottom of the third through hole penetrates through a bottom of the toothbrush head, and a top of the third through hole penetrates through a hairbrush of the toothbrush head.

Preferably, the telescopic motor is a brushless telescopic motor, and the foam pump is a foam pump with a filler plug.

Compared with the prior art, the present invention has the beneficial effects as follows: in an apparatus for automatically squeezing mousse toothpaste according to the present invention, the toothpaste and liquid enter the foam pump from the liquid inlet of the foam pump, then the piston is driven by the telescopic motor to fully mix the toothpaste and the liquid in the foam pump, and mixed liquid flows from the second through hole of the connecting shaft to the toothbrush head for use;
and instead of a brush motor for driving the pump, the brushless telescopic motor is used to drive the foam pump, where the brushless telescopic motor in the present invention has the advantages of low noise, small size, and uniform and fine foams squeezed.

The additional aspects and advantages of the present invention will be partially given in the description below, and part of them will become apparent from the description below or will be learned from the practice of the present invention.

### BRIEF DESCRIPTION OF THE DRAWINGS

To more clearly illustrate the technical solutions in the embodiments of the present invention or in the prior art, the accompanying drawings that need to be used in the description of the embodiments or the prior art will be briefly described below. Apparently, the accompanying drawings in the description below merely illustrate some embodiments of the present invention. Those of ordinary skill in the art may also derive other accompanying drawings from these accompanying drawings without creative efforts.
FIG. 1 is a schematic structural diagram of the present invention;
FIG. 2 is a schematic structural diagram of an internal structure of the present invention;
FIG. 3 is a schematic structural diagram of a foam pump in the present invention;
FIG. 4 is a schematic diagram of an internal exploded structure of the present invention; and
FIG. 5 is a schematic structural diagram of a toothbrush head in the present invention.

In the drawings: 1. toothbrush main body; 2. telescopic motor; 3. foam pump; 4. connecting shaft; 5. driving motor; 6. first through hole; 7. air inlet; 8. liquid inlet; 9. piston; 10. liquid outlet; 11. casing tube; 12. positioning rod; 13. second through hole; 14. toothbrush head; and 15. third through hole.

### DESCRIPTION OF THE EMBODIMENTS

The technical solutions in the embodiments of the present invention will be clearly and completely described below. Apparently, the described embodiments are merely some rather than all of the embodiments of the present invention. All other embodiments obtained by those of ordinary skill in the art based on the embodiments in the present invention without creative efforts shall fall within the scope of protection of the present invention.

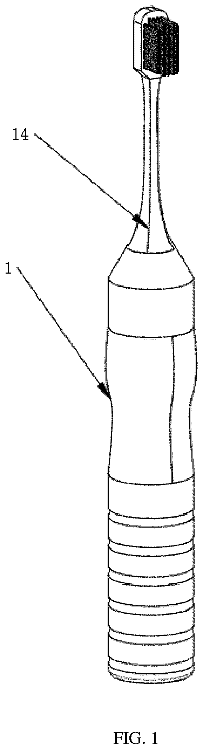

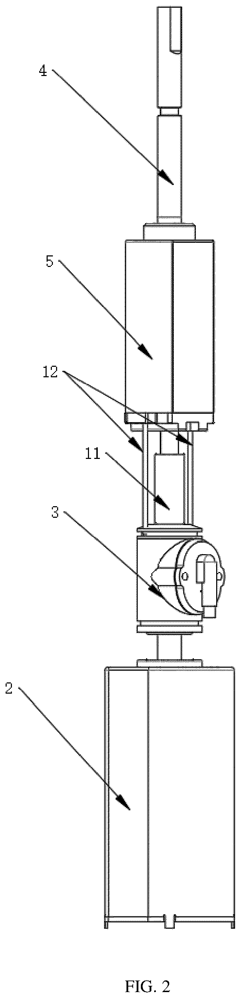

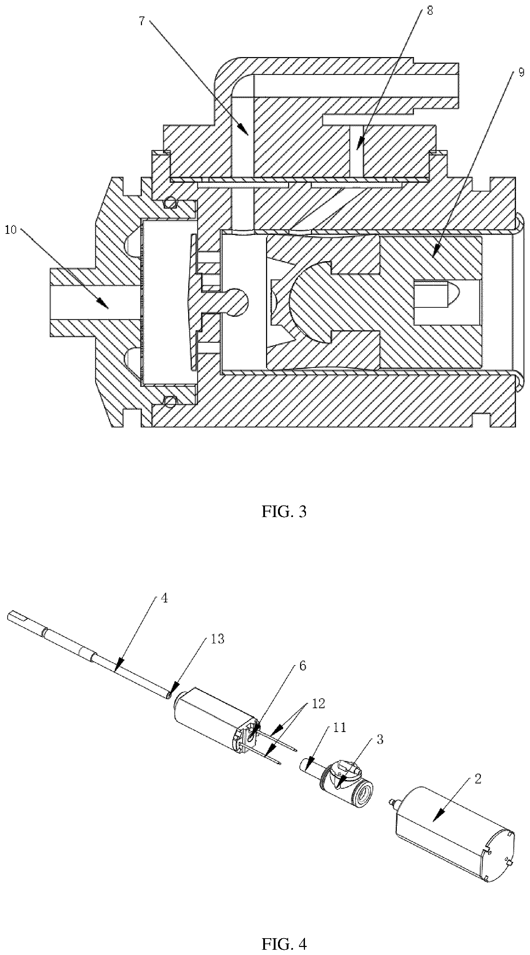

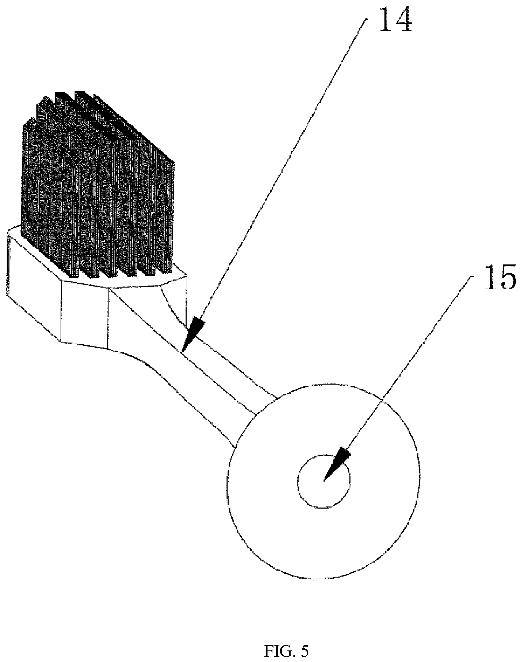

Referring to FIGS. 1 to 5, in an embodiment of the present invention, an apparatus for automatically squeezing mousse toothpaste includes a toothbrush main body 1, where a telescopic motor 2, a foam pump 3, a connecting shaft 4, and a driving motor 5 are vertically arranged in the toothbrush main body 1 from bottom to top;
the telescopic motor 2 is vertically fixed at an inner bottom of the toothbrush main body 1, a bottom of the foam pump 3 is connected to a top of the telescopic motor 2, a bottom of the connecting shaft 4 is connected to a top of the foam pump 3, a first through hole 6 is vertically provided in the driving motor 5 and penetrates through a top and a bottom of the driving motor 5, and the driving motor 5 is sleeved on the connecting shaft 4 via the first through hole 6; and
an air inlet 7 is provided on a left side of the top of the foam pump 3, a liquid inlet 8 is provided on a right side of the top of the foam pump 3, and both the air inlet 7 and the liquid inlet 8 penetrate through the foam pump 3.

Preferably, a piston 9 is arranged at an inner bottom of the foam pump 3, and the top of the telescopic motor 2 is fixedly connected to the piston 9.

Preferably, a liquid outlet 10 is provided at the top of the foam pump 3, a casing tube 11 is vertically arranged at the liquid outlet 10, the bottom of the connecting shaft 4 is arranged in the casing tube 11, and an outer side wall of the bottom of the connecting shaft 4 is connected to an inner side wall of the casing tube 11.

Preferably, positioning rods 12 are vertically arranged on the left side and the right side of the top of the foam pump 3, respectively, and a top of each of the positioning rods 12 is connected to the bottom of the driving motor 5.

Preferably, a second through hole 13 is vertically formed in the connecting shaft 4 and penetrates through a top and the bottom of the connecting shaft 4.

Preferably, the top of the connecting shaft 4 is sleeved with a toothbrush head 14, a third through hole 15 is vertically formed in the toothbrush head 14, a bottom of the third through hole 15 penetrates through a bottom of the toothbrush head 14, and a top of the third through hole 15 penetrates through a hairbrush of the toothbrush head 14.

Preferably, the telescopic motor 2 is a brushless telescopic motor 2, and the foam pump 3 is a foam pump 3 with a filler plug.

It is obvious for those skilled in the art that the present invention is not limited to the details of the above exemplary embodiments and can be implemented in other specific forms without departing from the spirit or basic features of the present invention. Therefore, from any point of view, the embodiments should be regarded as exemplary and non-restrictive. The scope of the present invention is limited by the appended claims rather than the above description. Therefore, it is intended to include all changes falling within the meaning and scope of the same elements of the claims in the present invention.

## Claims

1. An apparatus for automatically squeezing mousse toothpaste, **characterized by** comprising a toothbrush main body, wherein a telescopic motor, a foam pump, a connecting shaft, and a driving motor are vertically arranged in the toothbrush main body from bottom to top;
the telescopic motor is vertically fixed at an inner bottom of the toothbrush main body, a bottom of the foam pump is connected to a top of the telescopic motor, a bottom of the connecting shaft is connected to a top of the foam pump, a first through hole is vertically provided in the driving motor and penetrates through a top and a bottom of the driving motor, and the driving motor is sleeved on the connecting shaft via the first through hole; and
an air inlet is provided on a left side of the top of the foam pump, a liquid inlet is provided on a right side of the top of the foam pump, and both the air inlet and the liquid inlet penetrate through the foam pump.

2. The apparatus for automatically squeezing mousse toothpaste according to claim 1, **characterized in that** a piston is arranged at an inner bottom of the foam pump, and the top of the telescopic motor is fixedly connected to the piston.

3. The apparatus for automatically squeezing mousse toothpaste according to claim 1, **characterized in that** a liquid outlet is provided at the top of the foam pump, a casing tube is vertically arranged at the liquid outlet, the bottom of the connecting shaft is arranged in the casing tube, and an outer side wall of the bottom of the connecting shaft is connected to an inner side wall of the casing tube.

4. The apparatus for automatically squeezing mousse toothpaste according to claim 1, **characterized in that** positioning rods are vertically arranged on the left side and the right side of the top of the foam pump, respectively, and a top of each of the positioning rods is connected to the bottom of the driving motor.

5. The apparatus for automatically squeezing mousse toothpaste according to claim 1, **characterized in that** a second through hole is vertically formed in the connecting shaft and penetrates through a top and the bottom of the connecting shaft.

6. The apparatus for automatically squeezing mousse toothpaste according to claim 1, **characterized in that** the top of the connecting shaft is sleeved with a toothbrush head, a third through hole is vertically formed in the toothbrush head, a bottom of the third through hole penetrates through a bottom of the toothbrush head, and a top of the third through hole penetrates through a hairbrush of the toothbrush head.

7. The apparatus for automatically squeezing mousse toothpaste according to claim 1, **characterized in that** the telescopic motor is a brushless telescopic motor, and the foam pump is a foam pump with a filler plug.
